(19) Europäisches Patentamt / European Patent Office / Office européen des brevets

(11) **EP 1 816 875 A1**

(12) **EUROPEAN PATENT APPLICATION**

(43) Date of publication:
08.08.2007 Bulletin 2007/32

(51) Int Cl.:
*H04N 9/64* (2006.01)    *H04N 5/208* (2006.01)

(21) Application number: 06123205.4

(22) Date of filing: 30.10.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 01.02.2006 KR 20060009774

(71) Applicant: Samsung Electronics Co., Ltd.
Seoul 442-742 (KR)

(72) Inventor: Jo, Gye-wook
Yeongtong-gu
Suwon-si
Gyeonggi-do (KR)

(74) Representative: Waddington, Richard
Appleyard Lees
15 Clare Road
Halifax, Yorkshire HX1 2HY (GB)

(54) **Video signal processing method and device using coring means**

(57) A coring device is provided with a signal receiving part (110) which receives luminance signals, and a coring part (100) which linearly outputs an output luminance signal by applying a coring slope corresponding to a preset critical luminance level to only an input luminance signal, which is the critical luminance level or more, among the luminance signals. The coring slope means the slope when input luminance signals from the critical luminance level to the maximum input luminance level match with all the range of output luminance level. Accordingly, a gain of a high gradation signal in a high frequency band can be compensated, and the sharpness of the image quality can be improved.

## FIG. 2

EP 1 816 875 A1

**Description**

The present invention relates to a coring device, and a luminance processor using the coring device and methods thereof. More particularly, the present invention relates to a coring device which calculates an output luminance signal corresponding to an input luminance signal by matching the input luminance levels from the critical luminance level to the maximum input luminance level with the entire range of output luminance level, a luminance processor using the coring device, and methods thereof.

As electronic technologies are increasingly developed, the desire of users to view higher quality images, such as images with horizontal and vertical contour correction, is reflected in image display devices.

In general, horizontal and vertical contour correction is a correction operation used in image signal processors such as televisions to process signals in order to provide images with a clear outline. The horizontal and vertical contour correction is performed by a luminance processor.

Meanwhile, noise is inserted while image signals are received and input to the luminance processor. In this case, if image signals with noise are provided to a horizontal and vertical contour compensation circuit, even noise is unnecessarily contour-corrected and the image quality is degraded.

Accordingly, conventional luminance processors generally have a coring function. The coring function is a function for removing a luminance signal below a critical level of input luminance signal, and detecting only a luminance signal whose luminance level is the critical level or more. As the noise is generally inserted to low-gradation signals, only a luminance signal excluded from a dead zone is output to be used for horizontal and vertical contour correction by setting a certain size of the dead zone.

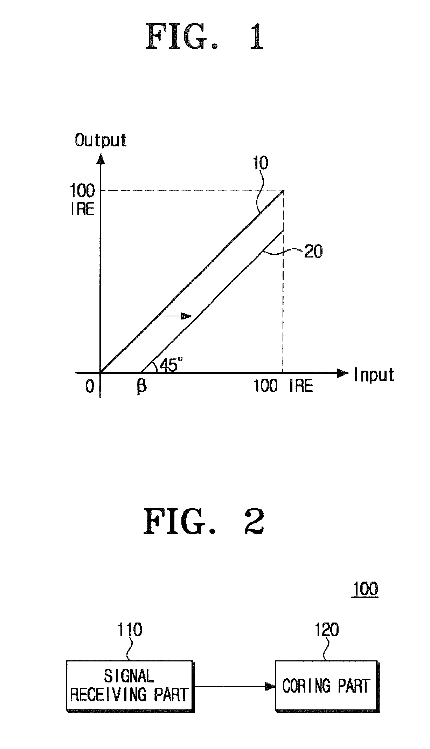

FIG. 1 is a graph to describe a coring method performed in a conventional luminance processor. In FIG. 1, the horizontal axis is an input luminance level, and the vertical axis is an output luminance level.

If an input luminance signal is received, a luminance processor outputs a corresponding output luminance signal. If the input luminance level and the output luminance level respectively are in the same range of 0-100 IRE, correlation between the input and output luminance signals can be shown as a first graph 10, which is a line of 45° passing through the zero point.

If the coring is applied in this state, when a critical level is β, the slope remains at 45° and the first graph 10 is moved to the right. That is, correlation between the input and output luminance signals is shown as a second graph 20. An angle of a graph showing correlation between the input and output luminance signals like the first and second graphs 10 and 20, that is, a slope, is generally referred to as a coring slope.

Accordingly, a coring device in a conventional luminance processor ignores an input luminance signal below β, and calculates an output luminance signal corresponding to the second graph 20 for input luminance signal of β or more.

Meanwhile, according to such a conventional coring device, due to linear coring using the second graph 20 whose slope of 45° the coring slope is maintained as it is, and a signal with a high input luminance level cannot be shown and an output gain of a high gradation signal is lowered. Accordingly, the sharpness of an image is lowered.

An aspect of the present invention is to address the above problems and/or disadvantages. Accordingly, an aspect of the present invention is to provide a coring device which calculates an output luminance signal corresponding to an input luminance signal by applying a coring slope corresponding to a critical level, and a method thereof.

Another aspect of the present invention is to provide a luminance processor which processes the luminance using the coring device, and a method thereof.

According to the present invention there is provided an apparatus and method as set forth in the appended claims. Preferred features of the invention will be apparent from the dependent claims, and the description which follows.

According to an aspect of the present invention, a coring device is provided comprising a signal receiving part which is operable to receive luminance signals, and a coring part which is operable to linearly output an output luminance signal by applying a coring slope corresponding to a preset critical luminance level to only an input luminance signal, which is the critical luminance level or greater.

The coring part may be operable to calculate the output luminance signal corresponding to the input luminance signal using the coring slope defined by the following equation: $\alpha = \tan^{-1} \dfrac{b}{a-c}$ , where $\alpha$ is the coring slope, a is a maximum input luminance level, b is a maximum output luminance level, and c is the critical luminance level.

The coring part may be operable to calculate the output luminance signal corresponding to the input luminance signal using the following equation: $y = \dfrac{b}{a-c} x - \dfrac{bc}{a-c}$ , where x is the input luminance level, and y is the output luminance level.

The coring device may further comprise a lookup table which is operable to store output luminance levels pre-calculated by applying the coring slope to each of the input luminance levels, wherein the coring part is operable to output the output luminance signal corresponding to the input luminance signal, referring to the lookup table.

The maximum input luminance level and the maximum output luminance level may be the same, and the critical luminance level may be adjustable.

According to another aspect of the invention, a luminance processor comprises:

a high-pass filter which is operable to pass only the high frequency component of a luminance signal, if a luminance signal is input,

a subtracter which is operable to remove the luminance signal passed by the high-pass filter from the luminance signal and to output a luminance signal of a low frequency band,

a coring device which is operable to linearly output an output luminance signal by applying a coring slope corresponding to a preset critical luminance level to only that portion of the luminance signal passed by the high-pass filter which is equal to or greater than the critical luminance level, and

an adder which is operable to add the output luminance signal calculated from the coring device and the luminance signal of the low frequency band output from the subtracter.

The coring device may be operable to calculate the output luminance signal corresponding to the input luminance signal using the coring slope as obtained by

the equation: $\alpha = \tan^{-1}\dfrac{b}{a-c}$ , where $\alpha$ is the coring slope, a is a maximum input luminance level, b is a maximum output luminance level, and c is the critical luminance level.

The coring device may be operable to calculate the output luminance signal corresponding to the input luminance signal using the equation:

$y = \dfrac{b}{a-c}x - \dfrac{bc}{a-c}$ , where x is the input luminance level, and y is the output luminance level.

The coring device may be operable to output the output luminance signal corresponding to the input luminance signal, referring to a lookup table which is operable to store output luminance levels pre-calculated by applying the coring slope to each of the input luminance levels.

The maximum input luminance level and the maximum output luminance level may be the same, and the critical luminance level may be adjustable.

According to another aspect of the present invention, there is provided a coring method comprising:

(a) receiving a luminance signal,
(b) detecting a portion of the input luminance signal whose luminance level is a preset critical luminance level or greater, and

(c) linearly outputting an output luminance signal by applying a coring slope corresponding to the critical luminance level to the detected input luminance signal.

The operation (c) may comprise calculating the output luminance signal corresponding to the input luminance signal using the coring slope as in the equation:

$\alpha = \tan^{-1}\dfrac{b}{a-c}$ , where $\alpha$ is the coring slope, a is a maximum input luminance level, b is a maximum output luminance level, and c is the critical luminance level.

The operation (c) may comprise calculating the output luminance signal corresponding to the input luminance signal using the equation:

$y = \dfrac{b}{a-c}x - \dfrac{bc}{a-c}$ , where x is the input luminance level, and y is the output luminance level.

The operation (c) may comprise outputting the output luminance signal corresponding to the input luminance signal, referring to a lookup table which stores output luminance levels pre-calculated by applying the coring slope to each of the input luminance levels.

The maximum input luminance level and the maximum output luminance level may be the same.

The coring method may further comprise setting the critical luminance level between a minimum input luminance level and the maximum input luminance level.

According to another aspect of the present invention, there is provided a luminance processing method comprising:

(a) passing only a high frequency portion of an input luminance signal using a high-pass filter,
(b) removing the portion of the luminance signal passed by the high-pass filter from the input luminance signal using a subtracter and outputting a low frequency portion of the input luminance signal,
(c) detecting a portion of the input luminance signal whose luminance level is a preset critical luminance level or more of the portion of the luminance signal passed by the high-pass filter,
(d) linearly outputting an output luminance signal by applying a coring slope corresponding to the critical luminance level to the detected portion of the input luminance signal, and
(e) adding the linearly calculated output luminance signal and the luminance signal of the low frequency band output in operation (b) to generate a final output luminance signal.

The operation (d) may comprise calculating the output luminance signal corresponding to the input luminance signal using the coring slope obtained by the fol-

lowing equation: $\alpha = \tan^{-1}\dfrac{b}{a-c}$ , where $\alpha$ is the cor-

ing slope, a is a maximum input luminance level, b is a maximum output luminance level, and c is the critical luminance level.

The operation (d) may comprise calculating the output luminance signal corresponding to the input luminance signal using the equation:

$$y = \dfrac{b}{a-c}x - \dfrac{bc}{a-c} ,$$ where x is the input luminance level, and y is the output luminance level.

The operation (d) may comprise outputting the output luminance signal corresponding to the input luminance signal, referring to a lookup table which stores output luminance levels pre-calculated by applying the coring slope to each of the input luminance levels.

The maximum input luminance level and the maximum output luminance level may be are the same.

The luminance processing method further may comprise setting the critical luminance level between a minimum input luminance level and the maximum input luminance level.

For a better understanding of the invention, and to show how embodiments of the same may be carried into effect, reference will now be made, by way of example, to the accompanying diagrammatic drawings in which:

    FIG. 1 is a graph to describe a conventional coring method;

    FIG. 2 shows the configuration of a coring device according to an exemplary embodiment of the present invention;

    FIG. 3 shows the configuration of a coring device according to another exemplary embodiment of the present invention;

    FIG. 4 is a graph to describe a coring method performed in the coring devices of FIGs. 2 and 3;

    FIG. 5 is a block diagram to describe an exemplary configuration of a luminance processor using the coring devices of FIGs. 2 and 3;

    FIG. 6 is a flow chart to describe a coring method according to an exemplary embodiment of the present invention; and

    FIG. 7 is a flow chart to describe a luminance processing method according to an exemplary embodiment of the present invention.

Throughout the drawings, like reference numerals will be understood to refer to like parts, components and structures.

Hereinafter, exemplary embodiments of the present invention will be described in detail with reference to the accompanying drawing figures.

In the following description, the same drawing reference numerals are used for the same elements even in different drawings. The details provided in the description, such as detailed construction and element descriptions, are provided to assist in a comprehensive understanding of the invention. Also, functions or constructions that are well known to those skilled in the art are not described in detail since that would obscure the invention in unnecessary detail.

FIG. 2 shows the configuration of a coring device according to an exemplary embodiment of the present invention. According to FIG. 2, the coring device 100 includes a signal receiving part 110, and a coring part 120.

The signal receiving part 110 receives a luminance signal from an external circuit. The external circuit may be any of various circuits such as a filter, a tuner, a signal processor, and an input/output port. The signal receiving part 110 transmits the received luminance signal to the coring part 120.

The coring part 120 removes a portion of the luminance signal that is below a preset critical luminance level from the received luminance signal, and calculates an output luminance signal by applying a coring slope to that portion of the luminance signal which is at the critical luminance level or greater.

In this case, the coring slope is determined according to the critical luminance level. That is, if the critical luminance level is high, the coring slope is high, or if the critical luminance level is low, the coring slope is low. More specifically, in the range of luminance level of the input luminance signal, the coring slope is adjusted in order for the range of luminance level from the critical luminance level to the maximum input luminance level to match the entire range of output luminance levels. The coring slope may be expressed as below:

[Equation 1]

$$\alpha = \tan^{-1}\dfrac{b}{a-c}$$

In Equation 1, $\alpha$ is the coring slope, a is the maximum input luminance level, b is the maximum output luminance level, and c is the critical luminance level. a and b may be set to be the same value. By IRE units, a and b are 100IRE each.

According to Equation 1, if a and b are fixed values, the coring slope varies according to the critical luminance level.

The coring part 120 can directly calculate and output an output luminance signal corresponding to an input luminance signal using the coring slope. More specifically, the output luminance signal may be calculated using the following equation:

$$[\text{Equation } 2]$$

$$y = \frac{b}{a-c}x - \frac{bc}{a-c}$$

In Equation 2, x is the luminance level of the input luminance signal, that is, the input luminance level, and y is the luminance level of the output luminance signal, that is, the output luminance level.

The coring part 120 can directly calculate the output luminance level by putting the luminance level of the input luminance signal in Equation 2.

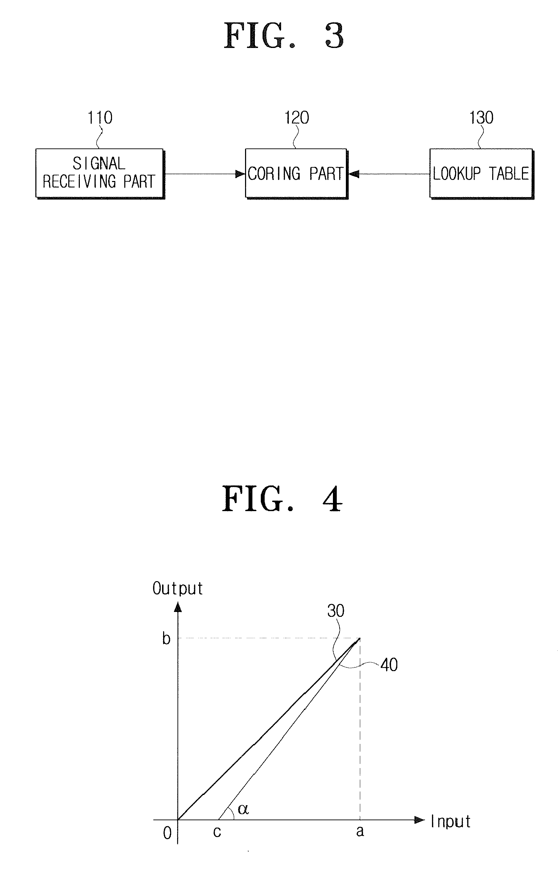

FIG. 3 shows the configuration of a coring device according to another exemplary embodiment of the present invention. According to FIG. 3, the coring device 100 includes a lookup table 130 as well as a signal receiving part 110 and a coring part 120. In FIG. 3, as the signal receiving part 110 and the coring part 120 function the same as those in FIG. 2, the same reference numerals are used.

However, the coring part 120 calculates the output luminance signal using the lookup table 130. The precalculated output luminance signal corresponding to each input luminance signal using the coring slope according to Equation 1 can be recorded in the lookup table 130. The lookup table 130 may be implemented with a storage element such as a memory. Additionally, the lookup table 130 is located outside of the coring part 120 in FIG. 3, but may be located separately in the coring part 120 in the form of an internal register.

Meanwhile, the critical luminance level can be adjusted at the user's pleasure. That is, a user or manufacturer connect a personal computer or other device to the coring device 100 and execute a program to control the coring part 120 so as to adjust the critical luminance level. In this case, correlation between the input and output luminance level according to each critical luminance level can be pre-calculated and recorded in the lookup table 130.

FIG. 4 is a graph to describe a coring method performed in the coring devices 100 of FIGs. 2 and 3. In FIG. 4, the horizontal axis indicates the luminance level of the input luminance signal, and the vertical axis indicates the luminance level of the output luminance signal. According to FIG. 4, when coring is not applied, correlation between the input and output luminance signals is shown as the first graph 30. If the maximum input level is a, and the maximum output level is b, the slope of the first graph 30 is b/a.

Meanwhile, when coring is applied, correlation between the input and output luminance signals is shown as the second graph 40. The second graph 40 is expressed as a line with the coring slope of α. α can be calculated by Equation 1. The second graph 40 matches the range of c-a of the input luminance level with the range of 0-b of the output luminance level.

If a and b are 100IRE and c is 5IRE, when the input luminance signal of 10IRE is input to the coring device 100, the luminance level of the output luminance signal is approximately 6.315IRE according to Equation 2.

If the resolving power of the coring device 100 is low, a value under radix point is ignored and the value except for the value under radix point is output as the output luminance signal. That is, if 10IRE is input in the above example, 5IRE is calculated, and if 11IRE is input, 6IRE is calculated.

Furthermore, if the lookup table 130 is used, the output luminance level can be grouped by particular unit considering the resolving power of the coring device 100. In this case, if the output luminance level is grouped by 3IRE units, the output luminance level in the range of 1-3IRE is output to 3IRE, and the output luminance level in the range of 4-6IRE is output to 6IRE.

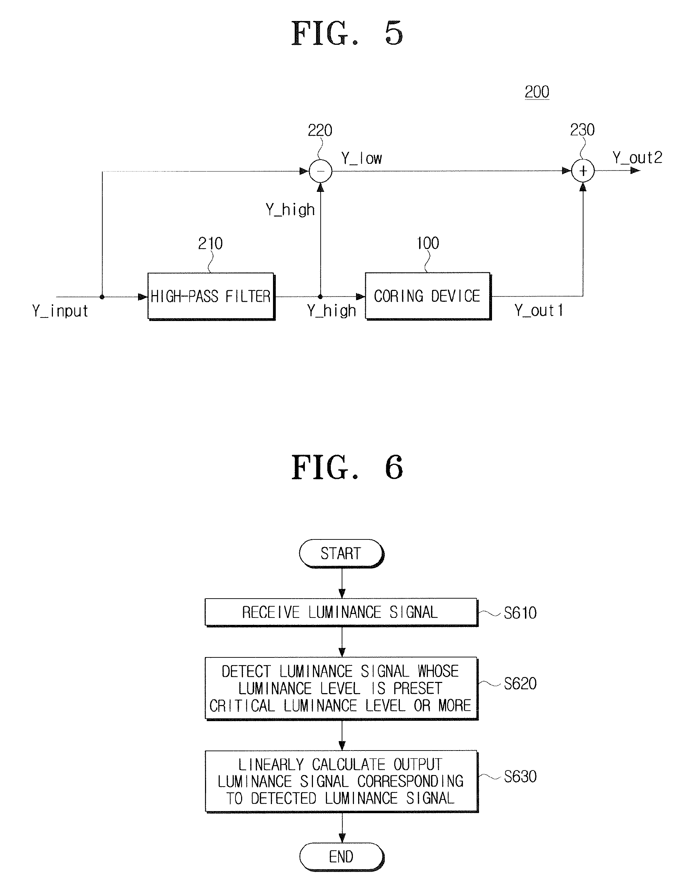

FIG. 5 is a block diagram to describe an exemplary configuration of a luminance processor according to an exemplary embodiment of the present invention. According to FIG. 5, the luminance processor 200 includes a high-pass filter 210, a subtracter 220, a coring device 100 and an adder 230.

The high-pass filter 210 filters an input luminance signal Y_input to pass only a luminance signal of a high frequency band Y_high.

The subtracter 220 subtracts the luminance signal Y_high passed in the high-pass filter 210 from the input luminance signal Y_input to output a low frequency band signal Y_low.

The coring device 100 outputs an output luminance signal by applying a coring slope corresponding to a critical luminance level to only the luminance signal over the preset critical luminance level among the luminance signal Y-high passed in the high-pass filter 210. The coring device 100 may have the configuration of FIG. 2 or FIG. 3. Accordingly, the calculation according to Equation 2 is performed, or an output luminance signal corresponding to an input luminance signal is calculated using the lookup table 130.

The output luminance signal Y_out1 calculated in the coring device 100 is provided to the adder 230. The adder 230 adds the output signal Y_low of the subtracter 220 and the output signal Y_out1 of the coring device 100 to output a final output signal Y_out2.

The final output signal Y_out2 is provided to circuits such as a horizontal and vertical contour correction circuit (not shown) to display an image.

FIG. 6 is a flow chart to describe a coring method according to an exemplary embodiment of the present invention. According to FIG. 6, if a luminance signal is received (S610), an input luminance signal with the luminance level which is a preset critical luminance level or more is detected (S620), and an output luminance signal corresponding to the detected input luminance signal is linearly output (S630). As the method of calculating the output luminance signal has been already described in detail in FIGs. 2 and 3, additional description is omitted.

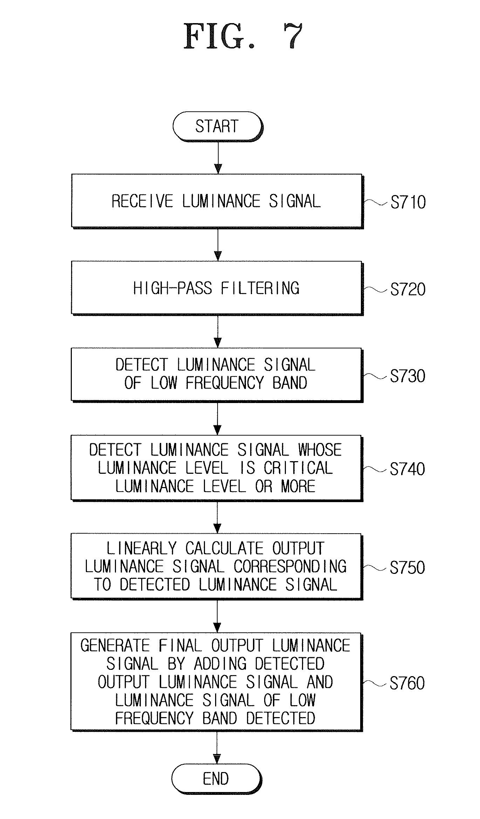

FIG. 7 is a flow chart to describe a luminance processing method according to an exemplary embodiment of the present invention. According to FIG. 7, if a luminance signal is received (S710), a luminance signal of a high frequency band is detected by high-pass filtering (S720). Additionally, a luminance signal of a low frequency band is detected by subtracting the luminance signal of the high frequency band from the input luminance signal (S730).

Next, a luminance signal with a luminance level which is the critical luminance level or more is detected from the detected luminance signal of the high frequency band (S740), and an output luminance signal corresponding to the detected luminance signal is linearly output (S750). As the method of calculating the output luminance signal has been already described in the above, additional description is omitted.

Therefore, a final output luminance signal is generated by adding the detected output luminance signal and the luminance signal of the low frequency band detected in S730 (S760).

As shown in the exemplary embodiments, the critical luminance level can be adjusted to various values according to designing intention, and the coring slope can be adjusted to various values according to the value of the critical luminance level.

As can be appreciated from the above description, an input luminance signal can match the entire range of an output luminance signal according to the present invention. Accordingly, high gradation signals can be expressed, and a gain can be prevented from dropping in a high frequency band. As a result, the sharpness of the image quality can be improved.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A coring device, comprising:

   a signal receiving part which is operable to receive an input luminance signal; and
   a coring part which is operable to linearly output an output luminance signal by applying a coring slope corresponding to a preset critical luminance level to only that portion of the received input luminance signal which is at the critical luminance level or greater.

2. The coring device of claim 1, wherein the coring part is operable to calculate the output luminance signal corresponding to the input luminance signal using the coring slope obtained by an equation:

$$\alpha = \tan^{-1} \frac{b}{a-c}$$

   , where $\alpha$ is the coring slope, a is a maximum input luminance level, b is a maximum output luminance level, and c is the critical luminance level.

3. The coring device of claim 2, wherein the coring part calculates the output luminance signal corresponding to the input luminance signal using an equation:

$$y = \frac{b}{a-c}x - \frac{bc}{a-c}$$

   , where x is the input luminance level, and y is the output luminance level.

4. The coring device of claim 2 or claim 3, further comprising a lookup table which is operable to store output luminance levels pre-calculated by applying the coring slope to each of the input luminance levels, wherein the coring part is operable to output the output luminance signal corresponding to the input luminance signal, referring to the lookup table.

5. The coring device of any one of claims claim 2 to 4, wherein the maximum input luminance level and the maximum output luminance level are the same.

6. The coring device of any preceding claim, wherein the critical luminance level is adjustable.

7. A luminance processor, comprising:

a high-pass filter (210) which is operable to pass only a high frequency portion of an input luminance signal;
a subtracter which is operable to remove the portion of the luminance signal passed by the high-pass filter from the input luminance signal and to output a luminance signal of a low frequency band;
a coring device (100) which is operable to linearly output an output luminance signal by applying a coring slope corresponding to a preset critical luminance level to only that portion of the high frequency portion of the luminance signal which is at the critical luminance level or greater; and
an adder which is operable to add the output luminance signal calculated from the coring device and the luminance signal of the low frequency band output from the subtracter.

8. The luminance processor of claim 7, wherein the coring device (100) is operable to calculate the output luminance signal corresponding to the input luminance signal using the coring slope obtained by an equation:

$$\alpha = \tan^{-1} \frac{b}{a-c}$$

, where $\alpha$ is the coring slope, a is a maximum input luminance level, b is a maximum output luminance level, and c is the critical luminance level.

9. The luminance processor of claim 8, wherein the coring device (100) is operable to calculate the output luminance signal corresponding to the input luminance signal using an equation:

$$y = \frac{b}{a-c} x - \frac{bc}{a-c}$$

, where x is the input luminance level, and y is the output luminance level.

10. The luminance processor of claim 8 or claim 9, wherein the coring device (100) is operable to output the output luminance signal corresponding to the input luminance signal, referring to a lookup table which is operable to store output luminance levels pre-calculated by applying the coring slope to each of the input luminance levels.

11. The luminance processor of any one of claims 8 to 10, wherein the maximum input luminance level and the maximum output luminance level are the same.

12. The luminance processor of any one of claims 7 to 11, wherein the critical luminance level is adjustable.

13. A coring method, comprising:

(a) receiving a luminance signal;
(b) detecting a portion of an input luminance signal whose luminance level is a preset critical luminance level or greater; and
(c) linearly outputting an output luminance signal by applying a coring slope corresponding to the critical luminance level to the detected portion of the input luminance signal.

14. The coring method of claim 13, wherein (c) comprises calculating the output luminance signal corresponding to the input luminance signal using the coring slope obtained by an equation:

$$\alpha = \tan^{-1} \frac{b}{a-c}$$

, where $\alpha$ is the coring slope, a is a maximum input luminance level, b is a maximum output luminance level, and c is the critical luminance level.

15. The coring method of claim 14, wherein (c) comprises calculating the output luminance signal corresponding to the input luminance signal using an equation:

$$y = \frac{b}{a-c} x - \frac{bc}{a-c}$$

, where x is the input luminance level, and y is the output luminance level.

16. The coring method of claim 14 or claim 15, wherein (c) comprises outputting the output luminance signal corresponding to the input luminance signal, referring to a lookup table which stores output luminance levels pre-calculated by applying the coring slope to each of the input luminance levels.

**17.** The coring method of any one of claims 14 to 16, wherein the maximum input luminance level and the maximum output luminance level are the same.

**18.** The coring method of any one of claims 13 to 17, further comprising setting the critical luminance level between a minimum input luminance level and the maximum input luminance level.

**19.** A luminance processing method, comprising:

(a) passing only a high frequency band portion of an input luminance signal using a high-pass filter;
(b) removing the high frequency band portion from the input luminance signal using a subtracter and outputting a luminance signal of a low frequency band;
(c) detecting that portion of the input luminance signal whose luminance level is a preset critical luminance level or greater;
(d) linearly outputting an output luminance signal by applying a coring slope corresponding to the critical luminance level to the detected portion of the input luminance signal; and
(e) adding the linearly calculated output luminance signal and the luminance signal of the low frequency band output in operation (b) to generate a final output luminance signal.

**20.** The luminance processing method of claim 19, wherein (d) comprises calculating the output luminance signal corresponding to the input luminance signal using the coring slope obtained by an equation:

$$\alpha = \tan^{-1}\frac{b}{a-c}$$

, where $\alpha$ is the coring slope, a is a maximum input luminance level, b is a maximum output luminance level, and c is the critical luminance level.

**21.** The luminance processing method of claim 20, wherein (d) comprises calculating the output luminance signal corresponding to the input luminance signal using an equation:

$$y = \frac{b}{a-c}x - \frac{bc}{a-c}$$

, where x is the input luminance level, and y is the output luminance level.

**22.** The luminance processing method of claim 20, wherein (d) comprises outputting the output luminance signal corresponding to the input luminance signal, referring to a lookup table which stores output luminance levels pre-calculated by applying the coring slope to each of the input luminance levels.

**23.** The luminance processing method of any one of claims 20 to 22, wherein the maximum input luminance level and the maximum output luminance level are the same.

**24.** The luminance processing method of any one of claims 19 to 23, further comprising setting the critical luminance level between a minimum input luminance level and the maximum input luminance level.

# FIG. 1

# FIG. 2

# FIG. 3

```
  110                    120                    130
┌─────────────┐    ┌─────────────┐    ┌─────────────┐
│   SIGNAL    │───▶│ CORING PART │◀───│LOOKUP TABLE │
│RECEIVING PART│   │             │    │             │
└─────────────┘    └─────────────┘    └─────────────┘
```

# FIG. 4

# FIG. 5

# FIG. 6

# FIG. 7

```
        ( START )
            │
            ▼
┌───────────────────────────┐
│  RECEIVE LUMINANCE SIGNAL  │ ～S710
└───────────────────────────┘
            │
            ▼
┌───────────────────────────┐
│     HIGH-PASS FILTERING    │ ～S720
└───────────────────────────┘
            │
            ▼
┌───────────────────────────┐
│    DETECT LUMINANCE SIGNAL │ ～S730
│     OF LOW FREQUENCY BAND  │
└───────────────────────────┘
            │
            ▼
┌───────────────────────────┐
│ DETECT LUMINANCE SIGNAL WHOSE │
│  LUMINANCE LEVEL IS CRITICAL  │ ～S740
│    LUMINANCE LEVEL OR MORE    │
└───────────────────────────┘
            │
            ▼
┌───────────────────────────┐
│   LINEARLY CALCULATE OUTPUT   │
│ LUMINANCE SIGNAL CORRESPONDING │ ～S750
│  TO DETECTED LUMINANCE SIGNAL  │
└───────────────────────────┘
            │
            ▼
┌───────────────────────────┐
│ GENERATE FINAL OUTPUT LUMINANCE │
│    SIGNAL BY ADDING DETECTED    │
│  OUTPUT LUMINANCE SIGNAL AND    │ ～S760
│    LUMINANCE SIGNAL OF LOW      │
│   FREQUENCY BAND DETECTED       │
└───────────────────────────┘
            │
            ▼
         (  END  )
```

European Patent Office

**EUROPEAN SEARCH REPORT**

Application Number

EP 06 12 3205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/128358 A1 (NAKAJIMA MITSUO [JP] ET AL) 16 June 2005 (2005-06-16)<br>* paragraph [0024] - paragraph [0033] *<br>----- | 1,6,7,<br>12,13,19 | INV.<br>H04N9/64<br>H04N5/208 |
| X | JP 03 236684 A (FUJITSU GENERAL LTD) 22 October 1991 (1991-10-22)<br>* abstract *<br>----- | 1,7,13,<br>19 | |
| A | JP 11 004363 A (FUJITSU GENERAL LTD) 6 January 1999 (1999-01-06)<br>----- | 1 | |
| A | US 4 962 426 A (NAOI NOBUAKI [JP] ET AL) 9 October 1990 (1990-10-09)<br>----- | 1 | |

TECHNICAL FIELDS SEARCHED (IPC)

H04N

The present search report has been drawn up for all claims

| Place of search | Date of completion of the search | Examiner |
|---|---|---|
| Munich | 31 May 2007 | Penchev, Petyo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 3205

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2007

| Patent document cited in search report | | Publication date | Patent family member(s) | | Publication date |
|---|---|---|---|---|---|
| US 2005128358 | A1 | 16-06-2005 | CN 1627791 A | | 15-06-2005 |
| | | | JP 2005175735 A | | 30-06-2005 |
| JP 3236684 | A | 22-10-1991 | NONE | | |
| JP 11004363 | A | 06-01-1999 | NONE | | |
| US 4962426 | A | 09-10-1990 | JP 1256875 A | | 13-10-1989 |
| | | | JP 2543567 B2 | | 16-10-1996 |

For more details about this annex : see Official Journal of the European Patent Office, No. 12/82